# EUROPEAN PATENT SPECIFICATION

(11) **EP 0 791 482 B1**
(45) Date of publication and mention of the grant of the patent: **14.05.2003**
(21) Application number: 97300060.7
(22) Date of filing: 07.01.1997
(51) Int. Cl.: B60B 27/02

(54) **Bicycle hub**
Fahrradnabe
Moyeu de bicyclette

(30) Priority: 20.02.1996 JP 5697696
(43) Date of publication of application: 27.08.1997
(73) Proprietor: Shimano Inc., Osaka 590-0824 (JP)
(72) Inventor: Tabe, Koshi, Sakai-shi,Osaka 590-01 (JP)
(74) Representative: Pacitti, Paolo

(56) References cited:
- DE-U- 9 010 815
- DE-U- 9 207 715
- DE-U- 9 419 357
- FR-A- 2 340 830
- US-A- 4 344 659

## Description

### BACKGROUND OF THE INVENTION

The present invention is directed to a bicycle hub and, more particularly, to a bicycle hub which is specially suited for use in harsh environments under demanding conditions.

A bicycle hub, such as a front wheel hub, must be capable of withstanding static and dynamic loads while permitting the wheels to rotate smoothly and easily. Some bicycles that are subjected to rough and rapid maneuvers, such as mountain bikes, are equipped with shock absorbers in the front fork. Shock absorbers serve to cushion the impact that is transferred from the road surface to the bicycle body via the wheels when the bicycle is traveling, as well as to increase road contact with the wheels, improve steering control, and the like. Hubs in general need to have high rigidity, but front fork hubs that are provided with shock absorbers need even more rigidity because poor rigidity leads to loss of control in steering.

Front wheel hubs that are primarily used in off-road riding are subject to severe wear due to the entry of dirt, sand, and other foreign matter into sliding members. For this reason, front wheel hubs that incorporate sealed bearings equipped with outer rings, inner rings and rolling members are widely known. In conventional hubs, however, dirt, sand, and other foreign matter get caught between the inner ring and the hub axle when changing hubs outdoors because the hub axle is inserted directly into the inner ring of the bearing. The presence of foreign matter leads to wear in the inner ring of the bearing and in the hub axle, thus damaging the precise alignment required in the hub. Consequently, the desired rigidity of the hub is lost, and the service life of the hub is shortened.

Examples of hub arrangements are shown in FR2340830 which comprises the features mentioned in the Preamble of claim 1, and Japanese Laid-Open Patent Application 2-155803. Japanese Laid-Open Patent Application 2-155803 discloses a motorcycle rear wheel apparatus which is provided with a center spacer on the outer periphery of an axle shaft for the purpose of preventing dislocation of hub members. The inner ring of the bearings of this motorcycle rear wheel apparatus are not marred by the axle shaft because the axle shaft is supported by the inner ring of the bearings via the center spacer. However, this design allows foreign matter to easily enter the bearings directly from the outside. If this design is used under harsh conditions, such as those to which mountain bikes are subjected, foreign matter will enter the bearings. A solution to the problem of foreign matter entering to bearings is proposed in DE 9207715.30.

### SUMMARY OF THE INVENTION

The present invention is directed to a bicycle hub in accordance with claim 1, which prevents wear on the inner bearing rings and which also prevents dirt, sand and other foreign matter from entering the bearings. In one embodiment of the present invention, a bicycle hub includes a hub axle, a spacer disposed over an outer periphery of the hub axle, a hub shell, and a bearing disposed between the spacer and the hub shell for rotatably supporting the hub shell on the hub axle. The bearing is of the type including an inner ring, an outer ring, and a plurality of rolling members disposed between the inner ring and the outer ring. By supporting the bearing with a spacer rather than directly on the axle, wear on the inner bearing ring is eliminated.

To prevent dirt, sand and other foreign matter from entering the bearings, a seal is disposed between the spacer and the hub shell laterally outwardly of the bearing. In a more specific embodiment, a lock spacer is disposed over an outer periphery of the hub axle and is positioned between the hub axle and the hub shell. In this case the seal is disposed between the lock spacer and the hub shell laterally outwardly of the bearing. If desired, the lock spacer may include a flange disposed within the hub shell so that the seal is disposed between the flange and the bearing. The seal may include a first tongue for contacting a hub shell member and a second tongue for contacting the lock spacer. If the lock spacer includes an outer peripheral surface adjacent to the flange, then the second tongue may be disposed radially outwardly of the outer peripheral surface. The resulting structure forms a labyrinth seal which effectively prevents contaminants from reaching the bearings.

### BRIEF DESCRIPTION OF THE DRAWINGS

Figure 1 is a top cross sectional view of a bicycle hub assembly according to the present invention;
Figure 2 is a front cross sectional view of the bicycle hub assembly shown in Figure 1;
Figure 3 is a side cross sectional view of the hub axle support bracket shown in Figure 1;
Figure 4 is a detailed cross sectional view of the sealing apparatus shown in Figure 1; and
Figure 5 is a detailed cross sectional view of an alternative embodiment of the sealing apparatus shown in Figure 1.

### DETAILED DESCRIPTION OF THE EMBODIMENTS

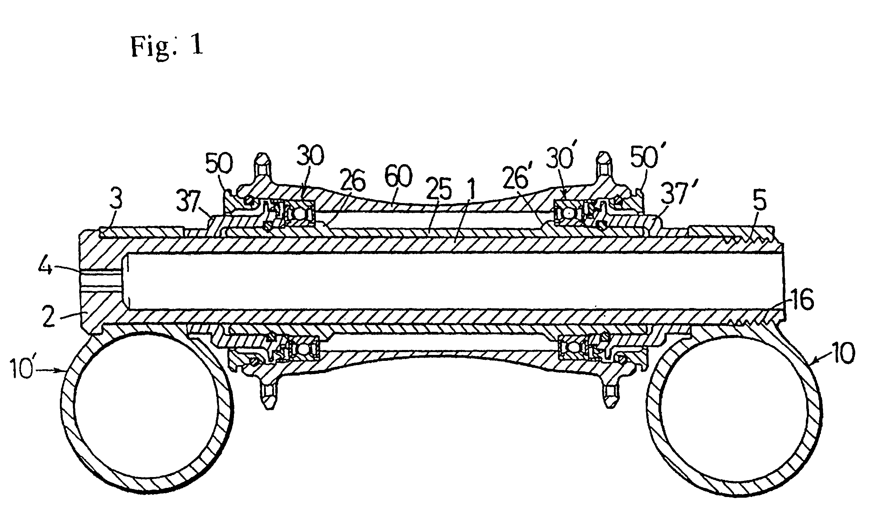

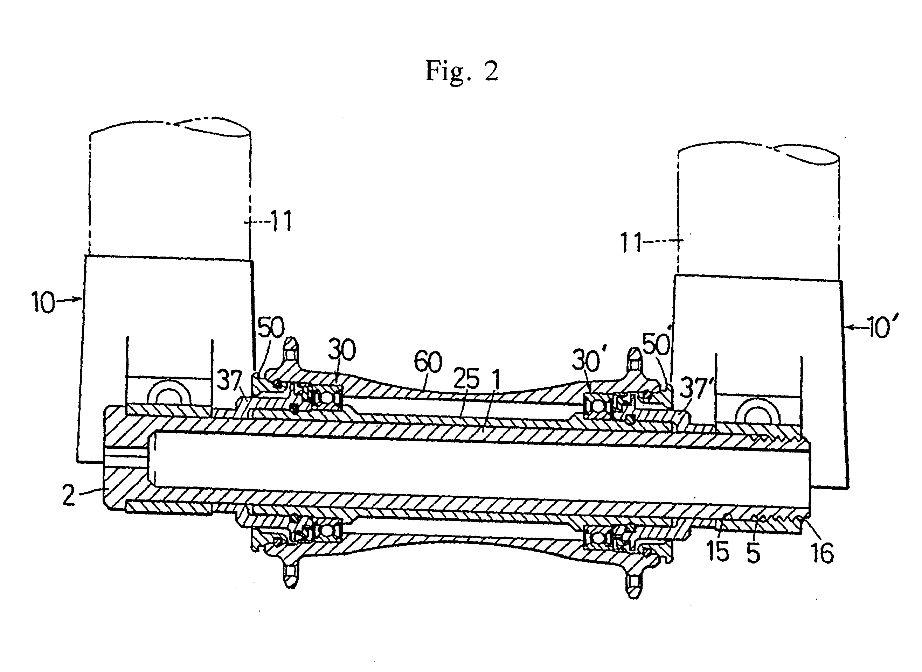

As shown in Figures 1-3, a hub axle I has a hollow interior and a cylindrical shape. A head member 2 is formed on the surface of one end of the hub axle 1, and a side surface 3 that contacts a hub axle support bracket 10 is formed on the outer periphery of the head member 2. The side surface 3 stops pressure in the direction of thrust via the hub axle support bracket 10. A wrench hole 4 which extends in the direction of the center line of the hub axle 1 is formed in the center of the head member 2. In this embodiment, the cross sectional shape of wrench hole 4 is a hexagon for the purpose of receiving a hexagonal wrench that turns the hub axle 1. A male thread 5 is formed on the outer periphery at the other end of the hub axle 1.

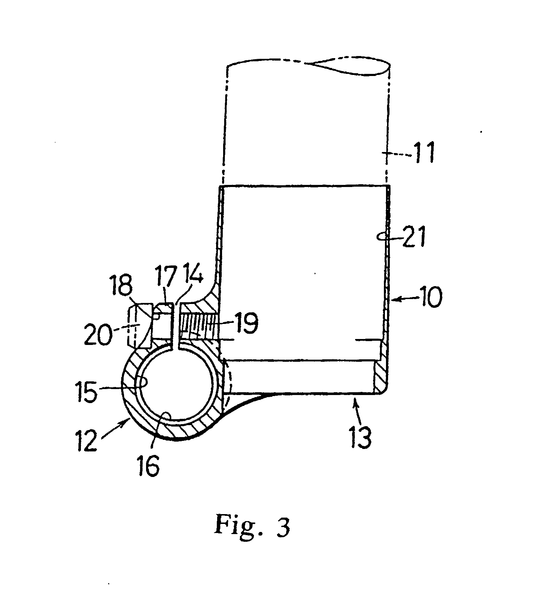

The two ends of the hub axle 1 are held in place with hub axle support brackets 10 and 10'. The hub axle support bracket 10 is linked and fastened to the lower end of a front fork 11 and, therefore, can be called a coupling for fastening the hub axle 1 to a bicycle frame. As shown in Figure 3, the hub axle support bracket 10 comprises a hub fastener 12 and a fork fastener 13. A slit 14 is formed in the hub axle fastener 12 such that the slit imparts a split-band shape to hub axle fastener 12. A female thread 16 is formed on an inner hole in the hub fastener 12, but there is not a female thread 16 on the other hub axle support bracket 10'.

A bolt insertion hole 18 is formed on the free end 17 of the hub axle fastener 12, and a screw hole 19 coaxial with the bolt insertion hole 18 is formed with the slit 14 in between. The hub axle fastener 12 is deformed by screwing a fixing bolt 20 into the screw hole 19 so that the free end 17 narrows the width of the slit 14 and firmly fastens the hub axle I to the hub axle fastener 12.

A front fork fastener hole 21 for inserting the lower end of the front fork 11 is formed in the front fork fastener 13. The purpose of the front fork fastener hole 21 is to serve as a member for insertion and fixing of the lower end of the front fork 11. This fastening action is achieved by applying an adhesive followed by press fitting. Shock absorbers (not illustrated) are provided at the upper ends of the front fork 11. Shock absorbers will not be described in detail as they are not the gist of the present invention. The other hub axle support bracket 10' is symmetrical to the hub axle support bracket 10 and its configuration is identical with the exception of the female thread 16. Thus, a description of bracket 10' is omitted.

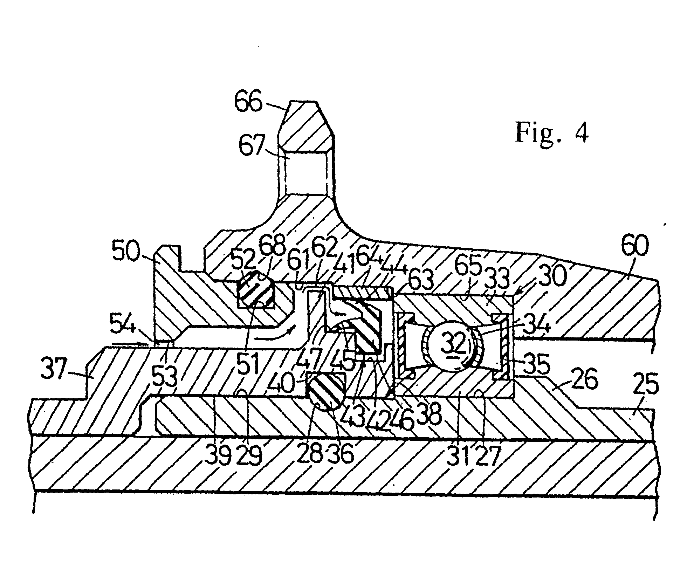

The configuration of a seal for preventing foreign matter from entering the bearing 30, which rotatably supports the hub shell 60 on the hub axle 1, will be described below with reference to Figure 4. Furthermore, the description will be limited to only one of the bearings since the configuration of the front wheel hub is symmetrical. As shown in Figure 4, a cylindrical spacer 25 is disposed on the outer periphery of the hub axle 1. Flanges 26 are formed on both ends of the outer periphery of the spacer 25 for retaining an inner ring 31 of the bearing 30. The inner ring 31 of the bearing 30 is press fit around the outer periphery 27 outside the flange 26. An O-ring groove 28 having a semicircular arc shape viewed cross sectionally is formed on both ends of the spacer 25.

A lock spacer 37 is provided at a position on an outer periphery 29 at each end of the spacer 25. One end surface 38 of the lock spacer 37 contacts the side surface of the inner ring 31. A concave groove 40 is formed on an inner peripheral surface 39 of the lock spacer 37. When assembled, an O-ring 36 is first inserted and positioned in the concave groove 40, and then the inner surface 39 of the lock spacer 37 is pushed around the outer periphery 29 of the spacer 25 until O-ring 36 locks into O-ring groove 28.

A flange 41 is formed on the outer periphery at one end of the lock spacer 37. A narrow gap 62 is formed between the flange 41 and an inner peripheral surface of a hub shell 60, therefore constricting the air passageways and forming a kind of labyrinth. A concave seal-groove 42 is formed on the outer periphery near one end surface 38 of the lock spacer 37. A rectangular section 46 of an oil seal 43 is inserted into the concave seal-groove 42 in a manner that leaves a slight space between them. The rectangular section 46 of the oil seal 43 and the concave seal-groove 42 forms a further labyrinth seal.

A ring 64 is inserted firmly within an inner peripheral surface 63 of the hub shell 60, and the outer peripheral surface of a first tongue member 44 of oil seal 43 is held firmly in contact with the inner peripheral surface of ring 64. Ring 64 is not always necessary and is a member that is provided for adjusting dimensions. Thus, it is permissible to bring the outer peripheral surface of the first tongue member 44 directly into contact with the inner hole 63 ofthe hub shell 60. As the hub shell 60 begins to rotate when the bicycle is traveling, the first tongue member 44 of the oil seal 43 is in contact with the inner peripheral surface of the ring 64, so the oil seal 43 rotates as well.

A second tongue member 45 of the oil seal 43 lightly contacts an outer peripheral surface 47 of the lock spacer 37. Therefore, the outer peripheral surface 47 of the lock spacer 37 is exposed to wear by the second tongue member 45 which contacts the peripheral surface 47 of the lock spacer 37. In this example, only the lock spacer 37 is fabricated from a titanium alloy, a relatively hard material, whereas the other members are fabricated from aluminum alloys.

An outer ring 33 of the bearing 30 is press fit and fastened into an inner hole 65 of the hub shell 60. Steel balls 32 which are rolling members are positioned between the inner ring 31 and an outer ring 33, and the steel balls 32 roll on the race-groove surface. The steel balls 32 are positioned with equidistant spaces between balls and held in place by a retainer 34. Both end surfaces of the retainer 34 are covered with bearing covers 35 so that foreign matter does not enter. The design and function of the bearing 30 is well known.

Flanges 66 are formed on both ends of the hub shell 60, and spoke holes 67 are formed at equal angles along the outer periphery of the flanges 66. One end of a bicycle spoke is inserted and fastened in each spoke hole 67. An annular cap 50 is inserted and fastened within an inner surface of the hub shell 60 for filling the space between the hub shell 60 and the lock spacer 37, thus preventing foreign matter from entering the bearing 30.

A concave groove 51 is formed in the outer periphery of the cap 50 for insertion of an O-ring 52, and a V-groove 68 is formed on the inner peripheral surface 61 of the hub shell 60. When the cap 50 is inserted along the inner peripheral surface 61 of the hub shell 60 after the O-ring 52 has been slid into place around the cap 50, the O-ring 52 deforms and then snaps into V-groove 68, thus fastening the cap 50 is to the hub shell 60. A gap 54 is formed between an inner surface 53 of the cap 50 and the outer peripheral surface of the lock spacer 37 when cap 50 is in a fastened position. The gap 54 is very narrow, so the probability for foreign matter to enter is very low.

The following steps are taken to remove the front wheel hub from the front fork 11. Initially, the fixing bolt 20 is loosened. A wrench is inserted into the wrench hole 4 of the hub axle 1 and turned, which causes the male thread 5 of the hub axle 1 to disengage from the female thread 16 of the hub axle support bracket 10. The hub axle 1 is then removed from the spacer 25. The wheel, which is formed as an integral unit with the front wheel hub, can also be removed from hub axle support brackets 10 and 10' because the hub shell 60, the spacer 25, the bearing 30, the lock spacer 37, and the cap 50 are fabricated as an integral unit.

In order to attach the front wheel hub to the hub axle support brackets 10 and 10', the steps above should be taken in reverse order. If a wrench is inserted into the wrench hole 4 of the hub axle 1 and turned, then the male thread 5 of the hub axle 1 will screw into the female thread 16 of the hub axle support bracket 10. The side surface 3 of the head member 2 of the hub axle 1 pushes the hub axle fastener 12, and the hub axle fastener 12 pushes the lock spacer 37. When so pushed, the lock spacer 37 pushes the inner ring 31 of the bearing 30 against the flange 26 of the spacer 25. Similarly, the hub axle support bracket 10' on the opposite side pushes together the lock spacer 37', the inner ring 31' of the bearing 30', and the flange 26' of the spacer 25, all on the opposite side, so that the front wheel hub is fastened to the hub axle support brackets 10 and 10'.

As noted above, the gap 54 between the inner surface 53 of the cap 50 and the outer peripheral surface of the lock spacer 37 is very narrow, so the probability of foreign matter entering is small. Should foreign matter enter, however, it is hindered from entering the narrow gap 62 between the inner hole 61 and the hub shell 60. As the hub shell 60 starts to rotate when the bicycle is traveling, the first tongue member 44 of the oil seal 43 comes into contact with the inner peripheral surface of the ring 64, thus also rotating the oil seal 43. The first tongue member 44 expands outward radially due to the centrifugal force produced by the rotation of the oil seal 43, which further increases the sealing effect between said tongue member and the inner peripheral surface of the ring 64. The second tongue member 45 expands outwardly radially due to centrifugal force and separates from the outer peripheral surface 47 of the lock spacer 37, or the contact area is weakened. This compromises the sealing effect somewhat, but the rectangular section 46 of the oil seal 43 has been inserted into the concave groove 42, thus imparting a sealing effect due to the labyrinth, which effectively prevents foreign matter from entering.

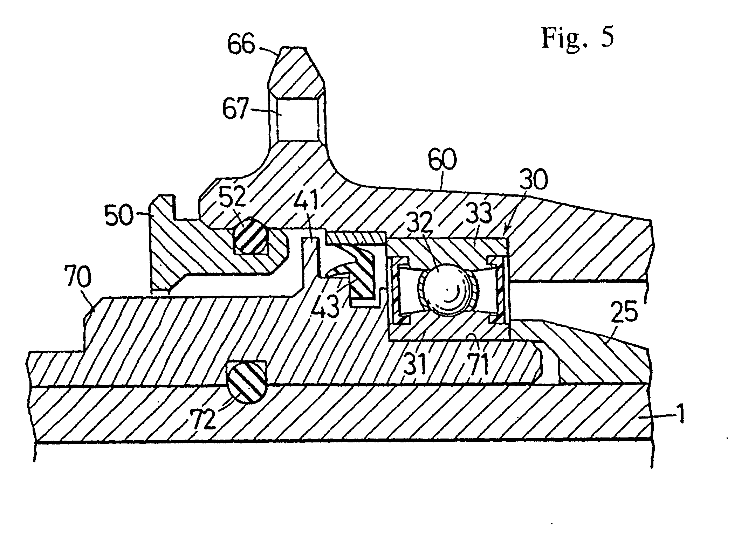

Figure 5 is a detailed cross sectional view of an alternative embodiment of the sealing apparatus shown in Figure 1. In this embodiment, the inner ring 31 of the bearing 30 is fitted around the outer periphery 71 of a lock spacer 70. An O-ring 72 is positioned between the lock spacer 70 and the outer peripheral surface of the hub axle 1. As can be seen from this embodiment, the advantages of the present invention can be achieved even without inserting the inner ring 31 of the bearing 30 into the spacer 25.

The hub axle 1 of the embodiments described above is fastened to the hub axle support bracket 10 by means of threads. However, the manner used for fastening the hub axle 1 is not limited to such a structure, and generally known fastening mechanisms such as nuts and quick-release mechanisms can be utilized as well. Furthermore, although the wrench hole 4 in the above embodiments was hexagonal in shape, a square hole, a hexagonal bolt head, and other such forms can be utilized.

Thus, the scope of the invention should not be limited by the specific structures disclosed. Instead, the true scope of the invention should be determined by the following claims. Of course, although labeling symbols are used in the claims in order to facilitate reference to the figures, the present invention is not intended to be limited to the constructions in the appended figures by such labeling.

## Claims

1. A bicycle hub comprising:
a hub axle (1);
a spacer (25) disposed over an outer periphery of the hub axle (1) ;
a hub shell (60);
a bearing (30), wherein the bearing (30) includes an inner ring (31), an outer ring (33) and a plurality of rolling members (32) disposed between the inner ring (31) and the outer ring (33), and the bearing (30) is disposed between the spacer and the hub shell (60) for rotatably supporting the hub shell (60) on the hub axle (1);
a seal (43) disposed between the spacer and the hub shell (60) laterally outwardly of the bearing (30),
**characterised in that** the seal (43) comprises a first tongue (44) for contacting the hub shell (60) and a second tongue (45) for contacting the spacer (25) or a lock spacer (37).

2. The hub according to Claim 1, wherein the first tongue (44) of the seal (43) extends laterally so that an end of the first tongue (44) moves radially outwardly when the hub shell (60) rotates.

3. The hub according to either Claim 1 or Claim 2 wherein the inner ring (31) is fitted on an outer periphery (27,71) of the spacer, and the outer ring (33) is fitted on an inner periphery (65) of the hub shell (60).

4. The hub according to any preceding claim wherein an end of the hub axle (1) forms a first threaded surface (5), and further comprising supporting means (13) for supporting the hub axle on a bicycle fork (11), the supporting means including a second threaded surface (16) for meshing with the first threaded surface (5).

5. The hub according to any preceding claim wherein the spacer comprises an axle spacer (25) and a lock spacer (37), wherein the inner ring (31) is disposed over an outer periphery (27) of the axle spacer (25), and the lock spacer (37) is disposed over an outer periphery of the hub axle (1) laterally outwardly of the axle spacer (25) and positioned between the hub axle (1) and the hub shell (60).

6. The hub according to Claim 5 wherein the axle spacer (25) includes a spacer surface (26) disposed laterally inwardly of the bearing (30), wherein the inner ring (31) abuts against the spacer surface (26), and wherein a surface (38) of the lock spacer (37) abuts against the inner ring (31).

7. The hub according to any of Claims 1 to 4 wherein the spacer comprises a lock spacer (70) and an axle spacer (25), wherein the inner ring (31) is disposed over an outer periphery (71) of the lock spacer (70), and the axle spacer (25) is disposed over an outer periphery of the hub axle (1) laterally inwardly of the lock spacer (70) and positioned between the hub axle (1) and the hub shell (60).

8. The hub according to any preceding claim, wherein the hub shell (60) includes a hub shell member (64), the first tongue (44) of the seal (43) contacting the hub shell member (64).

9. The hub according to Claim 8, wherein the hub shell member (64) comprises a separate ring member fitted to an inner peripheral surface (63) of the hub shell (60).

10. The hub according to any preceding claim wherein the spacer includes an outer peripheral surface (47), and wherein the second tongue (45) is disposed radially outwardly of the outer peripheral surface (47).

11. The hub according to any preceding claim further comprising a dust cap (50) disposed between the spacer and the hub shell (60) laterally outwardly of the seal (43).

12. The hub according to any preceding claim wherein the spacer includes a seal groove (42) and wherein the seal (43) includes a section (46) fitted within the seal groove (42).

13. The hub according to any preceding claim wherein the spacer includes a flange (41) disposed within the hub shell (60) and wherein the seal (43) is disposed between the flange (41) and the bearing (30).

## Patentansprüche

1. Eine Fahrradnabe, bestehend aus:
einer Nabenachse (1);
einem Abstandshalter (25), der über einem Außenumfang der Nabenachse (1) angeordnet ist;
einem Nabengehäuse (60);
einem Lager (30), wobei das Lager (30) einen Innenring (31), einen Außenring (33) und eine Vielzahl von rollenden Teilen (32), die zwischen dem Innenring (31) und dem Außenring (33) angeordnet sind, umfasst, und wobei das Lager (30) zwischen dem Abstandshalter und dem Nabengehäuse (60) angeordnet ist, um das Nabengehäuse (60) auf der Nabenachse (1) drehbar zu stützen;
einer Dichtung (43), die zwischen dem Abstandshalter und dem Nabengehäuse (60) seitlich auswärts des Lagers (30) angeordnet ist,
**dadurch gekennzeichnet, dass** die Dichtung (43) aus einer ersten Zunge (44) zum Berühren des Nabengehäuses (60) und einer zweiten Zunge (45) zum Berühren des Abstandshalters (25) oder eines Sperrabstandshalters (37) besteht.

2. Nabe gemäß Anspruch 1, wobei sich die erste Zunge (44) der Dichtung (43) seitlich erstreckt, so dass sich ein Ende der ersten Zunge (44) radial auswärts bewegt, wenn sich das Nabengehäuse (60) dreht.

3. Nabe gemäß Anspruch 1 oder Anspruch 2, wobei der Innenring (31) auf einen Außenumfang (27, 71) des Abstandshalters gepasst ist und der Außenring (33) auf einen Innenumfang (65) des Nabengehäuses (60) gepasst ist.

4. Nabe gemäß einem der vorhergehenden Ansprüche, wobei ein Ende der Nabenachse (1) eine erste Gewindefläche (5) bildet, und weiche ferner aus einem Stützmittel (13) zum Stützen der Nabenachse auf einer Fahrradgabel (11) besteht, wobei das Stützmittel eine zweite Gewindefläche (16) zum Ineinandergreifen mit der ersten Gewindefläche (5) umfasst.

5. Nabe gemäß einem der vorhergehenden Ansprüche, wobei der Abstandshalter aus einem Achsenabstandshalter (25) und einem Sperrabstandshalter (37) besteht, wobei der Innenring (31) über einem Außenumfang (27) des Achsenabstandshalters (25) angeordnet ist und der Sperrabstandshalter (37) über einem Außenumfang der Nabenachse (1) seitlich auswärts des Achsenabstandshalters (25) angeordnet ist und zwischen der Nabenachse (1) und dem Nabengehäuse (60) positioniert ist.

6. Nabe gemäß Anspruch 5, wobei der Achsenabstandshalter (25) eine Abstandshalterfläche (26) umfasst, die seitlich einwärts des Lagers (30) angeordnet ist, wobei der Innenring (31) an die Abstandshalterfläche (26) anstößt, und wobei eine Fläche (38) des Sperrabstandshalters (37) an den Innenring (31) anstößt,

7. Nabe gemäß einem der Ansprüche 1 bis 4, wobei der Abstandshalter aus einem Sperrabstandshalter (70) und einem Achsenabstandshalter (25) besteht, wobei der Innenring (31) über einem Außenumfang (71) des Sperrabstandshalters (70) angeordnet ist und der Achsenabstandshalter (25) über einem Außenumfang der Nabenachse (1) seitlich einwärts des Sperrabstandshalters (70) angeordnet ist und zwischen der Nabenachse (1) und dem Nabengehäuse (60) positioniert ist.

8. Nabe gemäß einem der vorhergehenden Ansprüche, wobei das Nabengehäuse (60) ein Nabengehäuseteil (64) umfasst, wobei die erste Zunge (44) der Dichtung (43) das Nabengehäuseteil (64) berührt.

9. Nabe gemäß Anspruch 8, wobei das Nabengehäuseteil (64) aus einem separaten Ringteil besteht, das an eine Innenumfangsfläche (63) des Nabengehäuses (60) gepasst ist.

10. Nabe gemäß einem der vorhergehenden Ansprüche, wobei der Abstandshalter eine Außenumfangsfläche (47) umfasst, und wobei die zweite Zunge (45) radial auswärts der Außenumfangsfläche (47) angeordnet ist.

11. Nabe gemäß einem der vorhergehenden Ansprüche, ferner bestehend aus einer Staubkappe (50), die zwischen dem Abstandshalter und dem Nabengehäuse (60) seitlich auswärts der Dichtung (43) angeordnet ist.

12. Nabe gemäß einem der vorhergehenden Ansprüche, wobei der Abstandshalter eine Dichtungsrille (42) umfasst, und wobei die Dichtung (43) einen Abschnitt (46) umfasst, der in die Dichtungsrille (42) gepasst ist.

13. Nabe gemäß einem der vorhergehenden Ansprüche, wobei der Abstandshalter einen Flansch (41) umfasst, der innerhalb des Nabengehäuses (60) angeordnet ist, und wobei die Dichtung (43) zwischen dem Flansch (41) und dem Lager (30) angeordnet ist.

## Revendications

1. Un moyeu de bicyclette comprenant :
un axe de moyeu (1) ;
une pièce d'écartement (25) disposée par-dessus une périphérie externe de l'axe de moyeu (1) ;
un carter de moyeu (60) ;
un palier (30), dans lequel le palier (30) comporte un anneau interne (31), un anneau externe (33) et une pluralité d'éléments de roulement (32) disposés entre l'anneau interne (31) et l'anneau externe (33), et le palier (30) est disposé entre la pièce d'écartement et le carter de moyeu (60) pour soutenir de façon rotative le carter de moyeu (60) sur l'axe de moyeu (1) ;
un joint (43) disposé entre la pièce d'écartement et le carter de moyeu (60) latéralement vers l'extérieur du palier (30),
**caractérisé en ce que** le joint (43) comprend une première languette (44) destinée à entrer en contact avec le carter de moyeu (60) et une deuxième languette (45) destinée à entrer en contact avec la pièce d'écartement (25) ou une pièce d'écartement de verrouillage (37).

2. Le moyeu selon la revendication 1, dans lequel la première languette (44) du joint (43) s'étend latéralement de sorte qu'une extrémité de la première languette (44) se déplace radialement vers l'extérieur lorsque le carter de moyeu (60) tourne.

3. Le moyeu selon soit la revendication 1, soit la revendication 2 dans lequel l'anneau interne (31) est installé sur une périphérie externe (27, 71) de la pièce d'écartement, et l'anneau externe (33) est emboîté sur une périphérie interne (65) du carter de moyeu (60).

4. Le moyeu selon n'importe quelle revendication précédente dans lequel une extrémité de l'axe de moyeu (1) forme une première surface filetée (5), et comprenant en outre un moyen de support (13) destiné à soutenir l'axe de moyeu sur une fourche de bicyclette (11), le moyen de support comportant une deuxième surface taraudée (16) destinée à se mettre en prise avec la première surface filetée (5).

5. Le moyeu selon n'importe quelle revendication précédente dans lequel la pièce d'écartement comprend une pièce d'écartement d'axe (25) et une pièce d'écartement de verrouillage (37), dans lequel l'anneau interne (31) est disposé par-dessus une périphérie externe (27) de la pièce d'écartement d'axe (25), et la pièce d'écartement de verrouillage (37) est disposée par-dessus une périphérie externe de l'axe de moyeu (1) latéralement vers l'extérieur de la pièce d'écartement d'axe (25) et positionnée entre l'axe de moyeu (1) et le carter de moyeu (60).

6. Le moyeu selon la revendication 5 dans lequel la pièce d'écartement d'axe (25) comporte une surface de pièce d'écartement (26) disposée latéralement vers l'intérieur du palier (30), dans lequel l'anneau interne (31) est en aboutement contre la surface de pièce d'écartement (26), et dans lequel une surface (38) de la pièce d'écartement de verrouillage (37) est en aboutement contre l'anneau interne (31).

7. Le moyeu selon n'importe lesquelles des revendications 1 à 4 dans lequel la pièce d'écartement comprend une pièce d'écartement de verrouillage (70) et une pièce d'écartement d'axe (25), dans lequel l'anneau interne (31) est disposé par-dessus une périphérie externe (71) de la pièce d'écartement de verrouillage (70), et la pièce d'écartement d'axe (25) est disposée par-dessus une périphérie externe de l'axe de moyeu (1) latéralement vers l'intérieur de la pièce d'écartement de verrouillage (70) et positionnée entre l'axe de moyeu (1) et le carter de moyeu (60).

8. Le moyeu selon n'importe quelle revendication précédente, dans lequel le carter de moyeu (60) comporte un élément de carter de moyeu (64), la première languette (44) du joint (43) entrant en contact avec l'élément de carter de moyeu (64).

9. Le moyeu selon la revendication 8, dans lequel l'élément de carter de moyeu (64) comprend un élément forment anneau distinct emboîté sur une surface périphérique interne (63) du carter de moyeu (60).

10. Le moyeu selon n'importe quelle revendication précédente dans lequel la pièce d'écartement comporte une surface périphérique externe (47), et dans lequel la deuxième languette (45) est disposée radialement vers l'extérieur de la surface périphérique externe (47).

11. Le moyeu selon n'importe quelle revendication précédente comprenant en outre un chapeau pare-poussière (50) disposé entre la pièce d'écartement et le carter de moyeu (60) latéralement vers l'extérieur du joint (43).

12. Le moyeu selon n'importe quelle revendication précédente dans lequel la pièce d'écartement comporte une rainure pour joint (42) et dans lequel le joint (43) comporte une section (46) installé au sein de la rainure pour joint (42).

13. Le moyeu salon n'importe quelle revendication précédente dans lequel la pièce d'écartement comporte un flasque (41) disposé au sein du carter de moyeu (60) et dans lequel le joint (43) est disposé entre le flasque (41) et le palier (30).
